# FASCICULE DE BREVET EUROPEEN

(11) **EP 0 480 849 B1**
(45) Date de publication et mention de la délivrance du brevet: **30.11.1994**
(21) Numéro de dépôt: 91420351.8
(22) Date de dépôt: 07.10.1991
(51) Int. Cl.: B65G 21/18, B65G 21/02

(54) **Combinaison d'un transporteur à rouleaux et d'une remorque ou analogue**
Kombination von einem Rollenförderer und einem Anhängewagen oder ähnlichem
Combination of a rollerconveyor and a trailer or the like

(30) Priorité: 08.10.1990 FR 9012587
(43) Date de publication de la demande: 15.04.1992
(73) Titulaire: SOCIETE EUROPEENNE MANUMECA: Société anonyme, F-69520 Grigny (FR)
(72) Inventeur: Pedronetto, Alain, F-63730 Corent (FR); Reynaud, Guy, F-69100 Villeurbanne (FR)
(74) Mandataire: Karmin, Roger

(56) Documents cités:
- GB-A- 929 042
- US-A- 2 262 443
- US-A- 4 013 167
- US-A- 4 837 911

## Description

La présente invention concerne une combinaison d'un transporteur à rouleaux et d'une remorque routière selon le préambule de la revendication 1 (US-A-4837911). L'invention a trait au transport de produits plats appelés "ensembles montés" et qui sont constitués chacun d'une roue munie de son enveloppe gonflée, l'ensemble étant équilibré statiquement et dynamiquement.

On sait qu'à l'heure actuelle, les chaînes de montage d'automobiles sont directement approvisionnées en ensembles montés à partir d'une usine indépendante qui est généralement une manufacture de pneumatiques à laquelle les roues ont été préalablement livrées. Cette façon de procéder entraîne des contraintes, car tous les ensembles montés d'un véhicule doivent être livrés groupés et que chaque livraison d'ensembles montés doit comporter un nombre très important de ceux-ci.

A cet effet, on a déjà prévu de réaliser des remorques routières ou analogues supportant un transporteur à rouleaux sans fin sur lequel sont stockés un certain nombre d'ensembles montés dans la manufacture de pneumatiques. Lorsque le transporteur est complètement rempli d'ensembles montés, la remorque est tractée vers l'usine de montage des automobiles où ils sont déchargés par groupes correspondant à chaque véhicule.

Les engins de ce genre existant actuellement comportent un ensemble de supports sur lesquels sont fixées rigidement les différentes spires du transporteur à rouleaux sans fin. Etant donné que ce dernier présente une longueur importante qui peut aller jusqu'à 250 à 300 mètres linéaires, il supporte une charge très importante (de l'ordre de 5 à 6 000kg) qui se transmet à toutes les liaisons des membrures du transporteur avec les supports. Ces efforts sont très importants en considération des trépidations transmises du fait des irrégularités de la route. De plus, ces efforts sont beaucoup plus importants lors du freinage ou dans les courbes. C'est ainsi que la structure considérée est hyperstatique et qu'en conséquence, sous l'effet des contraintes, il se produit très souvent des ruptures incontrôlables qui entraînent bien entendu des réparations et l'immobilisation de la remorque.

Les perfectionnements qui font l'objet de la présente invention visent à remédier à ces inconvénients et à permettre la réalisation d'une combinaison d'un transporteur à rouleaux et d'une remorque routière ou analogue dans laquelle les membrures dudit transporteur présentent une liberté de déplacement par rapport à leur support, déplacement qui reste bien entendu limité à des valeurs acceptables.

Suivant l'invention, les membrures internes et externes du transporteur à rouleaux sont aboutées au niveau de consoles horizontales fixées les unes au-dessus des autres par rapport au châssis de la remorque, les éclisses utilisées pour assembler lesdites membrures étant associées à des moyens de laisser auxdites membrures une liberté déterminée de déplacement longitudinal, transversal et vertical, tandis que des sabots sont ménagés sous les courbes du transporteur en vue de leur permettre de reposer sur des consoles fixes avec une liberté de déplacement longitudinal et transversal.

Le dessin annexé, donné à titre d'exemple, permettra de mieux comprendre l'invention, les caractéristiques qu'elle présente et les avantages qu'elle est susceptible de procurer :
Fig. 1 est une vue partielle en perspective de la combinaison d'un transporteur à rouleaux et d'une remorque routière établie conformément à l'invention.
Fig. 2 est une vue éclatée de chacune des jonctions de la membrure externe du transporteur au niveau de chacune des consoles des mâts supportant ce transporteur.
Fig. 3 est une vue en perspective à l'état monté des éléments illustrés en fig. 2.
Fig. 4 est une coupe suivant IV-IV (fig. 3).
Fig. 5 est une vue semblable à celle de fig. 2, mais illustrant la jonction de deux éléments de la membrure interne du transporteur à rouleaux.
Fig. 6 est une vue semblable à celle de fig. 3, mais concernant les organes de fig. 5.
Fig. 7 est une coupe suivant VII-VII (fig. 6).
Fig. 8 est une vue semblable à celle de fig. 3 mais concernant l'éclisse particulière associée aux consoles du pylône.
Fig. 9 est une vue en bout à partir de l'extérieur de chacune des éclisses associées aux consoles du pylône.

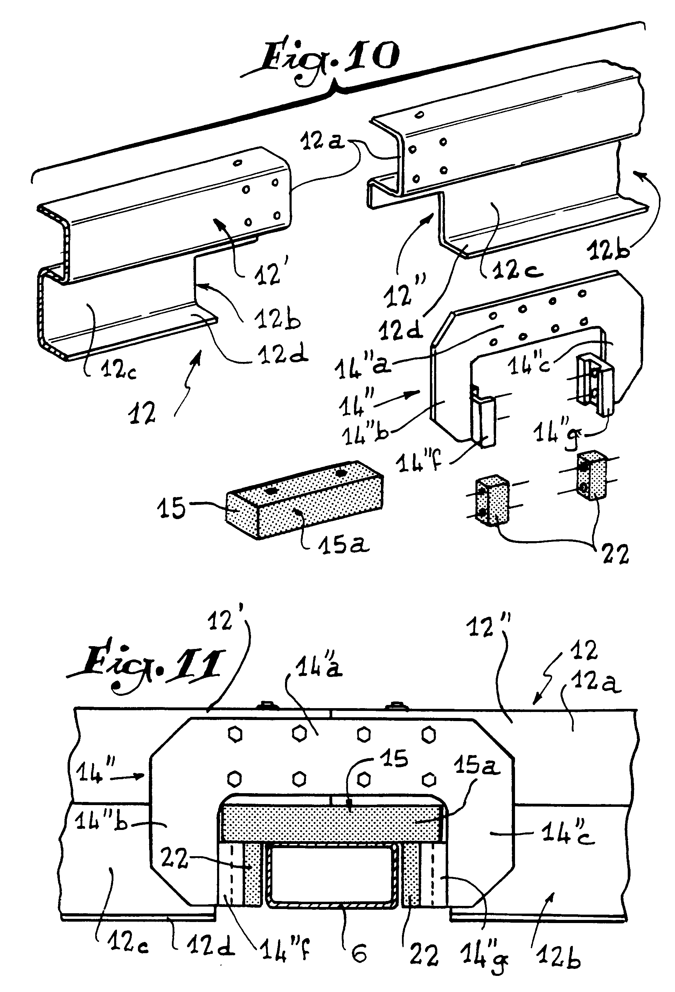

Fig. 10 est une vue semblable à celle de fig. 8, mais relative à l'éclisse de la membrure interne au droit des consoles du pylône.

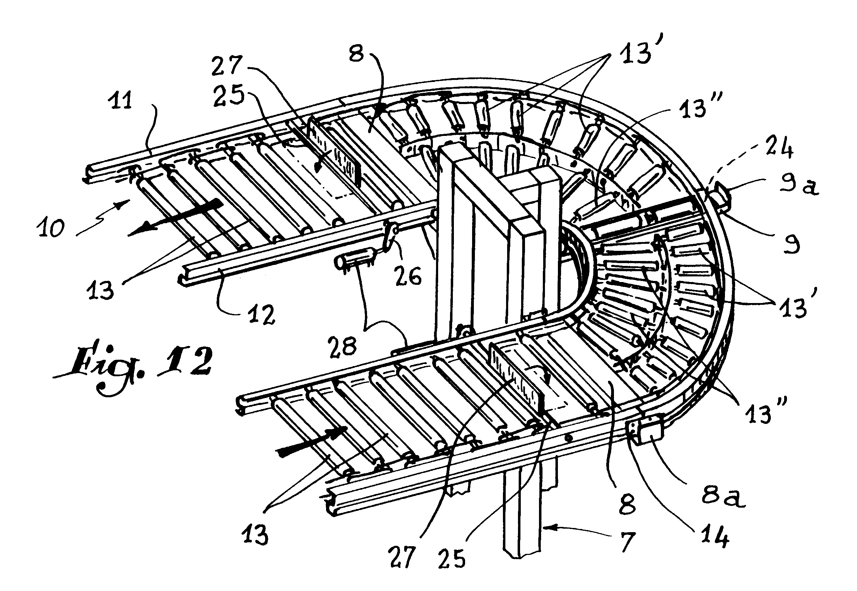

Fig. 11 est une vue semblable à celle de fig. 9, mais relative aux organes de fig. 10.
Fig. 12 est une vue en perspective illustrant les butées escamotables permettant l'isolement des ensembles montés disposés sur les parties rectilignes du transporteur.

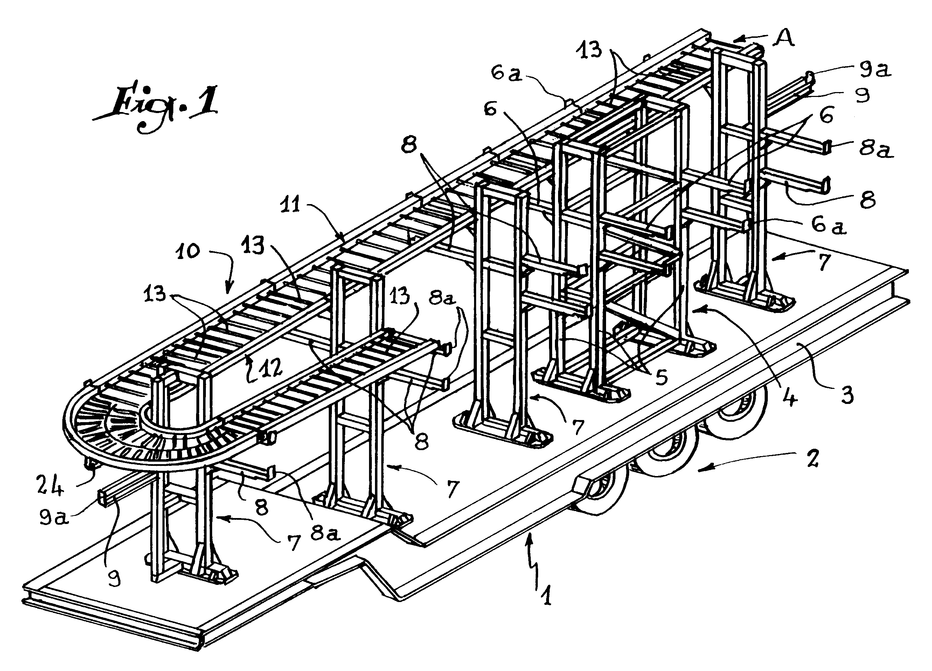

On a illustré en fig. 1 une remorque 1 pourvue d'un train de roulement 2, supportant un châssis 3. Sur celui-ci et au-dessus du train de roulement 2 est disposé un pylône rigide 4 constitué de montants verticaux 5 convenablement entretoisés. Chacun des montants 5 supporte des consoles horizontales 6 orientées latéralement vers l'extérieur et disposées les unes au-dessus des autres, comme on l'expliquera mieux plus loin.

En avant et en arrière du pylône 4, le châssis 3 supporte des mâts verticaux 7 portant chacun des consoles latérales horizontales 8 strictement identiques à celles 6 et disposées les unes au-dessus des autres. Les deux mâts extrêmes portent en plus des consoles longitudinales 9.

Les consoles 6, 8 et 9 sont disposées de manière à permettre à un transporteur à rouleaux 10 d'être soutenu en ne formant qu'une seule et même boucle en colimaçon, de telle sorte qu'en réalité les consoles précitées se trouvent à des niveaux différents depuis l'origine haute du transporteur référencée A jusqu'à son extrémité opposée non représentée et qui se trouve légèrement au-dessus du niveau du châssis 3 sur la face arrière de la remorque.

Le transporteur est constitué de deux membrures 11 et 12, la première s'étendant à l'extérieur et étant appelée par la suite membrure externe, tandis que l'autre 12 se trouve à l'intérieur et est appelée membrure interne. Entre les membrures 11 et 12 sont montés des rouleaux 13 convenablement entraînés par des moyens appropriés de manière continue pendant tout le chargement ou le déchargement des ensembles montés destinés à être transportés par la remorque 1.

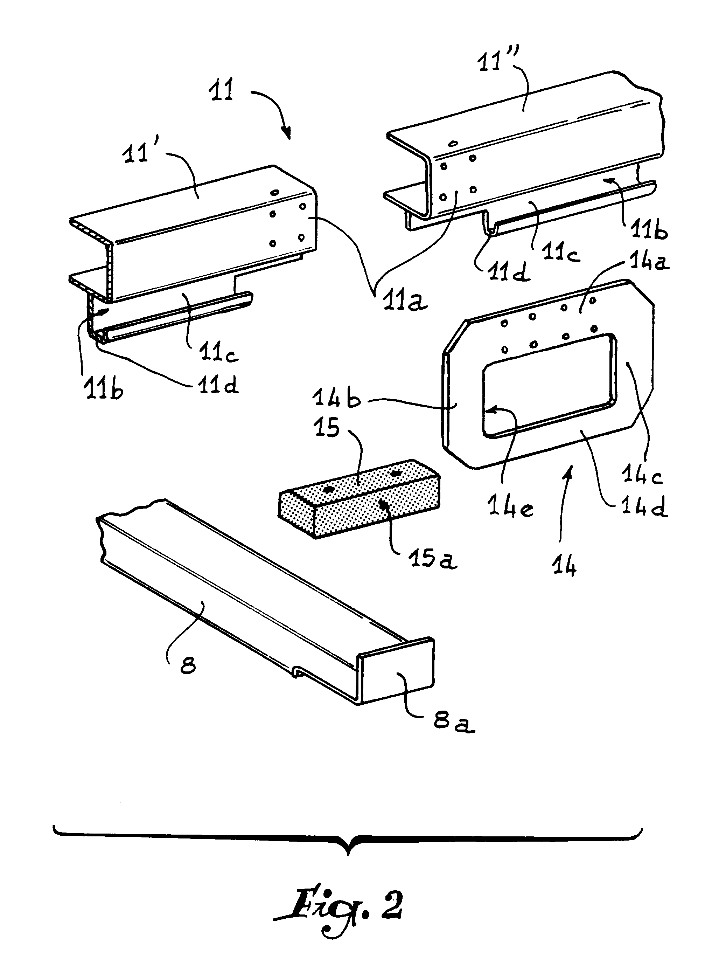

Comme illustré en fig. 2, chaque membrure externe 11 est composée d'éléments rectilignes 11', 11'' aboutés en vis-à-vis d'une part des consoles 6 du pylone 4 et d'autre part de celles 8 des mâts 7.

Chaque membrure externe 11 est constituée par un profilé en U 11a ouvert vers l'extérieur et dont l'aile inférieure est solidaire d'un profil 11b comportant une face verticale 11c et un bord relevé horizontal 11d. On observe que le profil 11b est grugé à chacune des extrémités en vis-à-vis des éléments 11', 11'' de manière à permettre la mise en place d'une éclisse 14 réalisée au moyen d'une plaque de tôle affectant la forme d'un O couché. L'éclisse 14 comporte ainsi une branche supérieure 14a destinée à abouter deux éléments 11', 11'' au moyen de rivets ou analogues, deux branches verticales 14b, 14c et une branche inférieure 14d. Les quatre branches de l'éclisse déterminent une ouverture centrale 14e.

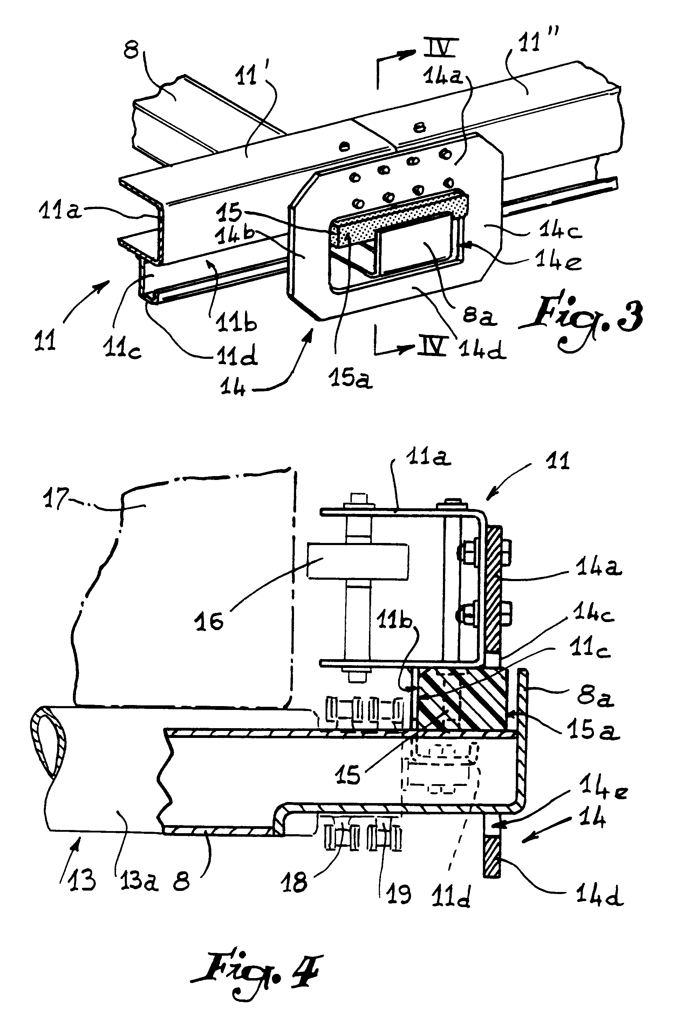

En fig. 2, on observe que l'extrémité de chaque console 8 est munie d'une patte verticale 8a qui dépasse au-dessus de la face supérieure de la console pour constituer une butée, comme on l'expliquera mieux plus loin. La section de l'extrémité de chaque console 8 est inférieure à celle de l'ouverture 14e, de sorte que cette extrémité peut traverser aisément ladite ouverture. Une semelle 15 réalisée en une matière présentant un bon coefficient de frottement est fixée à la partie de l'aile inférieure du profilé en U 11a dépassant au-delà du profil 11b en direction du bord horizontal 11d. La largeur de la semelle 15 est telle qu'elle traverse l'ouverture 14e de l'éclisse 14 lorsque celle-ci est fixée sur le voile du profilé 11a (fig. 3). Comme montré en fig. 4, la semelle 15 se trouve à une certaine distance en dessous de l'arête inférieure de la branche 14a de l'éclisse 14, tandis que sa face extrême 15a se trouve à peu près à même distance de la patte 8a après avoir traversé l'ouverture 14e de l'éclisse 14. On voit enfin que le dessous de l'extrémité de la console 8 se trouve au-dessus de l'arête intérieure de la branche 14d de l'éclisse. De même manière, la longueur de la semelle 15 est inférieure à celle de l'ouverture 14e, si bien qu'au niveau de chaque console 8, la membrure 11 présente un degré de liberté déterminé de déplacement longitudinal, transversal et vertical respectivement par la différence de longueur de la semelle et de l'ouverture de l'éclisse 14, la distance entre la face 15a de la semelle et la patte 8a et enfin le jeu entre le bas de la console et l'arête supérieure de la branche 14d de l'éclisse 14.

On observe en fig. 4 la présence de galets à axe vertical 16 disposés entre les ailes du profilé 11a et destinées à guider latéralement les produits plats ou ensembles montés 17 se déplaçant sur les rouleaux 13. Ces derniers comportent chacun une fourrure externe 13a reliée par un dispositif à friction à un axe non representé portant des pignons à chaîne 18, 19 pour leur entraînement en continu pendant le chargement ou le déchargement des ensembles montés. On ne reviendra pas sur la constitution particulière de tels rouleaux qui est bien connue dans la pratique et permet, lorsque les ensembles montés 17 sont arrêtés, que les fourrures 13a qui les supportent ne tournent pas, la force de friction étant bien entendu proportionnelle au poids des ensembles montés.

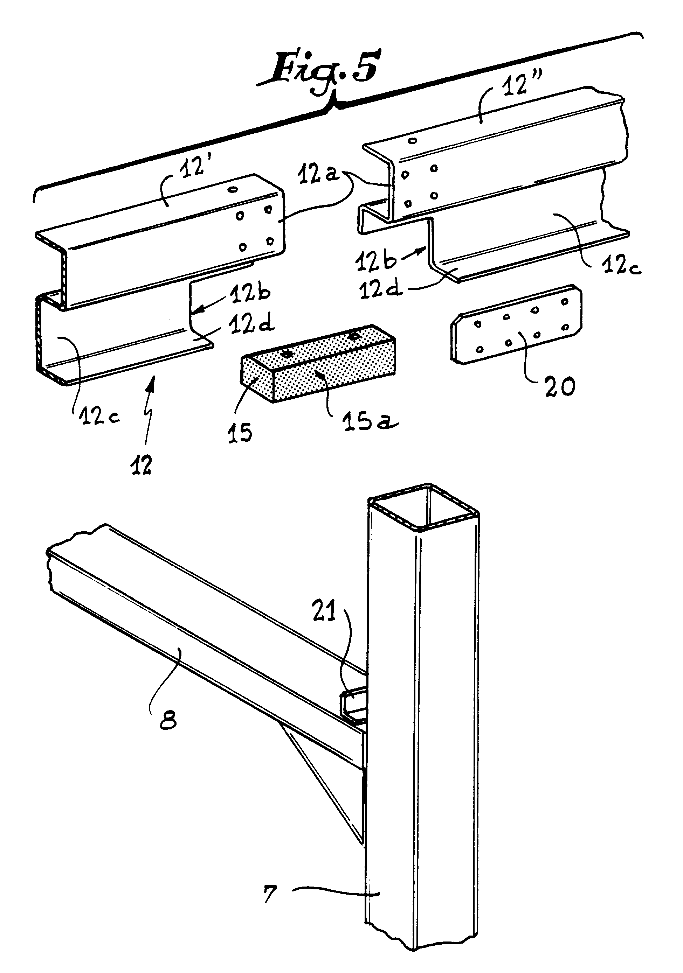

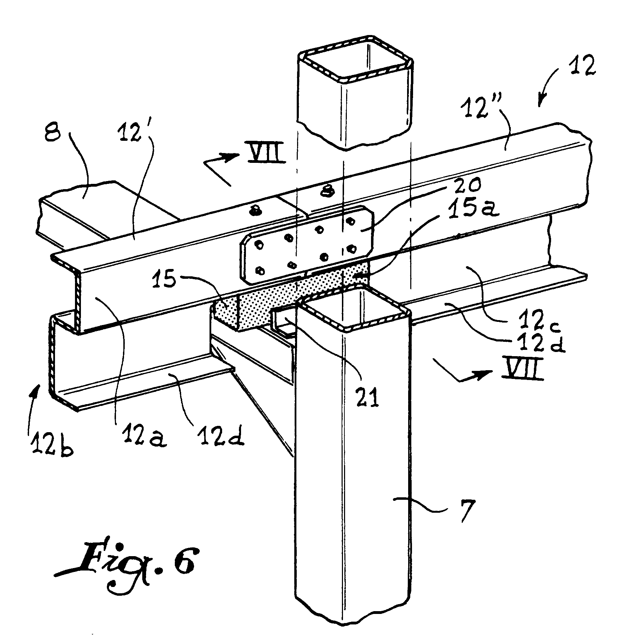

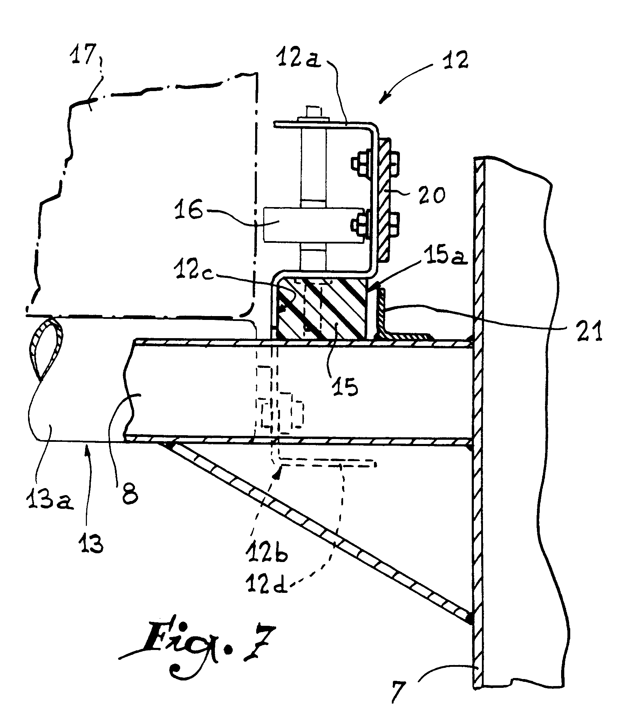

On a illustré en fig. 5 les différents organes destinés à abouter deux éléments 12', 12'' de la membrure interne 12 du transporteur à rouleaux au niveau de chaque console 8. Cette membrure présente une forme semblable à celle externe 11, mais elle est réalisée dans une seule pièce, c'est-à-dire que l'extrémité de l'aile inférieure du profilé en U 12a est solidaire de la face verticale 12c du profilé 12b correspondant à celui 11b, ladite face se prolongeant par un bord horizontal 12d. On note que dans ce cas, l'éclisse est une simple plaque rectangulaire 20 destinée à coopérer avec le voile des deux éléments 12', 12'' auxquels il est fixé par tous moyens appropriés tels par exemple que rivets, boulons etc... Le dessus de la console 8 au niveau de son origine par rapport au mât 7 est pourvu d'une butée 21. Comme dans le cas de l'ensemble de fig. 2, la semelle 15 est fixée à l'aile horizontale inférieure du profilé 12a (fig. 6). Comme illustré en fig. 7, il existe un jeu entre la face avant 15a de la semelle 15 et la butée 21, de telle sorte qu'au niveau de l'origine de chacune des consoles 8, la membrure interne 12 du transporteur présente une possibilité de glisser transversalement et longitudinalement par rapport à la console 8, tout en pouvant éventuellement se déplacer également dans le sens vertical vers le haut. On observe toutefois qu'à ce niveau, il n'y a aucune limite au déplacement de la membrure 12, les limites étant définies par rapport à la membrure externe.

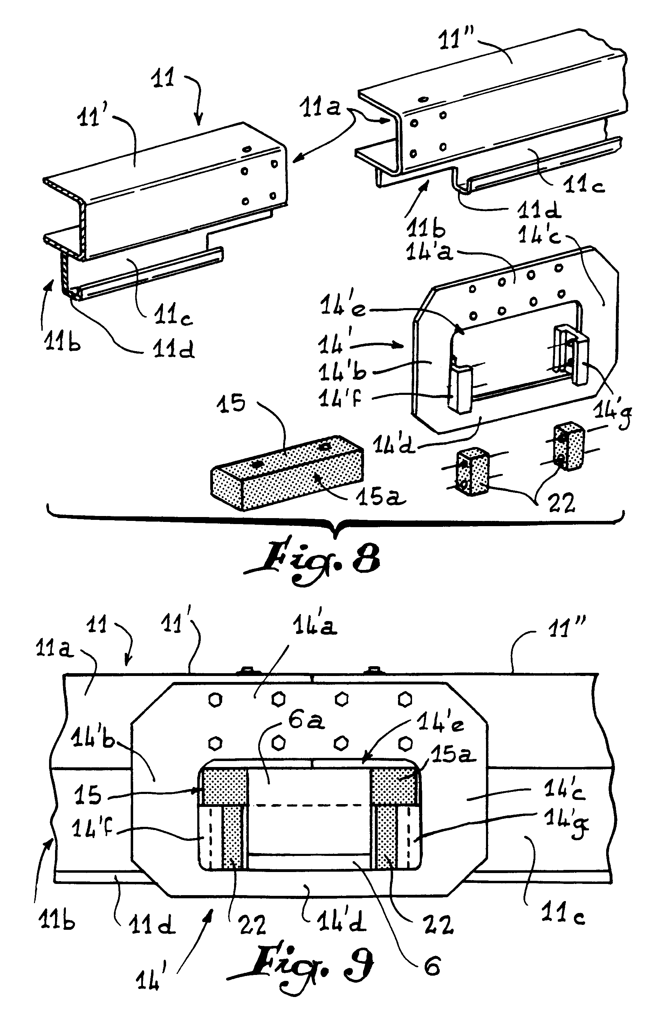

Comme illustré en fig. 8, l'éclisse 14' utilisée pour abouter deux éléments 11', 11'' de la membrure externe 11 au droit de chaque console 6 issue du pylône 4 diffère très légèrement de celle illustrée en fig. 2 à 4, bien qu'elle soit de dimensions identiques. La différence consiste en la présence de deux supports 14'f, 14'g associés aux bords de l'ouverture 14'e correspondant aux branches verticales 14'b et 14'c de l'éclisse. Sur ces supports sont fixés deux patins 22 réalisés en une matière semblable à celle constituant la semelle 15.

Bien entendu, les extrémités des consoles 6 comportent aussi chacune une patte 6a relevée vers le haut, de telle sorte que le jeu latéral de la membrure interne 11 est identique par rapport aux consoles 6 et par rapport à celles 8. Le jeu vertical est également identique par suite de l'identité de la structure générale et des dimensions de l'ouverture 14'e de l'éclisse 14' et celle 14e de l'éclisse 14. Toutefois, le déplacement longitudinal possible de la membrure 11 par rapport aux consoles 6 est réduit au jeu 23 existant entre les extrémités libres des patins 22 et les faces latérales de la console correspondante 6 (fig. 9).

L'éclisse 14'' utilisée pour abouter deux élément 12', 12'' de la membrure interne est semblable à celle 14' décrite ci-dessus, mais elle ne comporte pas la branche horizontale inférieure 14'd de manière à faciliter le montage de la membrure interne par rapport aux consoles 6. Sa branche horizontale 14''a est associée au voile du profilé 12a tandis que ses branches verticales 14''b, 14''c comprennent aussi des supports 14''f, 14''g identiques à ceux 14'f, 14'g pour la fixation des patins 22. On utilise aussi la semelle 15 placée au même endroit que sur la jonction illustrée en fig. 8 et 9, de telle sorte que la liberté de déplacement longitudinal et latéral de la membrure interne est identique à celle de la membrure externe. Toutefois, il n'y a aucune limite dans le déplacement vertical de la membrure 12 par rapport aux consoles 6. Bien entendu, au voisinage de sa jonction avec le pylône 4, chaque console 6 comporte une butée non référencée correspondant à celle 21 de chaque console 8.

Par construction, les membrures du transporteur ont une liberté de déplacement longitudinal et latéral plus réduite au niveau du pylône 4 qu'à celui des consoles 6.

On a illustré en fig. 12 la jonction de deux tronçons rectilignes du transporteur 10 et la courbe de liaison de ces deux tronçons. On observe la présence d'un sabot 24 disposé sous chacune des membrures 11 et 12 au-dessus de la console 9 qui comporte une patte extrême 9a relevée vers le haut. Ainsi, chaque courbe de liaison est soutenue dans le plan horizontal tout en pouvant se déplacer dans une limite déterminée par la position de la patte 9a dans le sens longitudinal et librement dans le sens transversal.

A la jonction des éléments rectilignes et de la courbe de liaison les réunissant, on a prévu de placer entre deux rouleaux 13 un arbre 25 tourillonnant par rapport aux membrures 11 et 12 et dépassant vers l'intérieur à partir des membrures internes 12 pour recevoir une biellette 26 calée angulairement par rapport à cet arbre 25. Entre les deux membrures, chaque arbre 25 porte un volet horizontal 27 qui peut être dressé verticalement en actionnant chaque biellette 26 par un moyen approprié, par exemple par un vérin 28. Lorsqu'on désire isoler les ensembles montés ou produits plats 17 situés sur les tronçons rectilignes du transporteur 10, il suffit de commander les vérins pour dresser verticalement les volets 26 qui constituent alors des butées. Ainsi, lors du freinage par exemple, les ensembles montés ou produits plats 17 situés sur les deux parties rectilignes ne peuvent pas, sous l'effet de l'inertie, se déplacer et venir sur ceux disposés sur la courbe. On évite ainsi tout coincement des ensembles montés dans les courbes.

On observe que dans celles-ci, il existe deux séries de rouleaux 13', 13'' placés bout à bout et dont seuls les rouleaux extérieurs 13' sont entraînés de même manière que les rouleaux 13. Bien entendu, les rouleaux 13' sont constitués comme ceux 13, ceux 13'' étant des rouleaux standards.

## Revendications

1. Combinaison d'un transporteur à rouleaux et d'une remorque routière, ledit transporteur consistant en une multiplicité de tronçons rectilignes situés les uns au-dessus des autres des deux côtés de la remorque et de courbes de liaison en vue de constituer un élément continu de stockage de produits plats, ledit transporteur étant soutenu par une structure solidaire du châssis de la remorque, caractérisée en ce que les membrures internes et externes (11, 12) du transporteur à rouleaux (10) sont aboutées au niveau de consoles horizontales (6, 8) fixées les unes au-dessus des autres par rapport au châssis (3) de la remorque (1), les éclisses utilisées pour assembler lesdites membrures étant associées à des moyens de leur laisser une liberté déterminée de déplacement longitudinal, transversal et vertical, tandis que des sabots (24) sont ménagés sous les courbes de liaison en vue de permettre aux membrures 11, 12 de reposer dans ces zones sur des consoles longitudinales fixes (9) avec une liberté de déplacement longitudinal et transversal.

2. Combinaison suivant la revendication 1, caractérisée en ce que le transporteur (10) est soutenu au niveau du train roulant (2) de la remorque (1) par un pylône rigide (4) pourvu de consoles latérales superposées (6) sur lesquelles reposent librement les membrures longitudinales (11, 12) du transporteur à rouleaux (10), chaque console (6) comportant des bords relevés (6a) de guidage latéral avec jeu du transporteur dont les éléments des membrures externes (11) sont aboutés au droit de chaque console (6) au moyen d'une éclisse (14') en forme de O couché entourant la console, ses branches verticales (14'b, 14'c) supportant deux patins (22) dont les faces en vis-à-vis se trouvent à une faible distance des ailes latérales de la console (6) considérée, tandis qu'une semelle (15) est fixée sous la jonction des deux éléments (11', 11'') en vue de reposer sur le dessus de ladite console (6) et de traverser avec jeu longitudinal et vertical l'ouverture (14'e) de l'éclisse (14').

3. Combinaison suivant la revendication 2, caractérisée en ce que les éclisses (14'') de liaison des membrures internes (12) du transporteur au niveau du pylone (4) sont réalisées au moyen d'une pièce en forme de C couché enjambant l'origine de la console (6) qui comporte au voisinage des montants (5) du pylône (4) des butées (21) de limitation du jeu latéral.

4. Combinaison suivant la revendication 3, caractérisée en ce que le transporteur (10) est soutenu en outre par des mâts verticaux (7) situés de part et d'autre du pylône (4) dans le sens longitudinal et comprenant des consoles superposées (8) sur lesquelles reposent les membrures (11, 12), les extrémités des consoles (8) comportant un bord relevé (8a), tandis qu'une butée (21) est prévue sur chaque console au voisinage de son origine sur le mât (7) afin de déterminer le débattement latéral du transporteur au droit de chaque mât, les éléments (11', 11'') constituant les membrures externes (11) du transporteur (10) étant aboutés au niveau des consoles (8) des mâts (7), leur liaison étant effectuée au moyen d'un éclisse (14) en forme de O couché dont la branche horizontale supérieure (14a) relie deux éléments (11', 11'') tandis que l'extrémité libre de la console (8) passe à travers l'ouverture (14e) de l'éclisse (14), une semelle (15) étant fixée sous la jonction des deux éléments (11', 11'') afin qu'elle traverse avec jeu longitudinal l'ouverture (14e) de l'éclisse (14) et qu'elle repose contre la face supérieure de la console (8).

5. Combinaison suivant les revendications 2 et 4, caractérisée en ce que la branche inférieure (14'd, 14''d) des éclisses (14', 14'') est disposée à l'état libre à une faible distance en dessous de la face inférieure de l'extrémité de la console.

6. Combinaison suivant la revendication 1, caractérisée en ce que des butées escamotables (27) sont placées au moins à la liaison des tronçons rectilignes et des courbes afin d'isoler les produits stockés (17) sur lesdits tronçons de ceux disposés sur les courbes.

7. Combinaison suivant la revendication 1, caractérisée en ce que les rouleaux (13) comportent un organe axial entraîné en permanence pendant le chargement et le déchargement des produits stockés ainsi qu'une fourrure externe (13a) reliée par friction à l'organe axial afin que les fourrures (13a) coopérant avec des produits (17) arrêtés ne tournent pas, la force de friction étant proportionnelle au poids des produits.

8. Combinaison suivant la revendication 7, caractérisée en ce que dans les courbes de liaison de transporteur (10) il est prévu deux rangées de rouleaux (13', 13'') dont ceux (13') de la rangée extérieure sont seuls entraînés.

## Claims

1. Combination of a roller conveyor and a road trailer, the said conveyor consisting of a plurality of straight sections situated above one another on either side of the trailer, and of linking curves with a view to forming a continuous element for storing flat products, the said conveyor being supported by a structure integral with the frame of the trailer, characterized in that the inner and outer rails (11, 12) of the roller conveyor (10) abut at the location of horizontal brackets (6, 8) fixed above one another relative to the frame (3) of the trailer (1), the fish-plates used to assembly the said rails being associated with means for allowing them a given freedom for longitudinal, transverse and vertical displacement, whilst shoes (24) are formed beneath the linking curves with a view to allowing the rails (11, 12) to rest in these zones on fixed longitudinal brackets (9) with freedom for longitudinal and transverse displacement.

2. Combination according to Claim 1, characterized in that the conveyor (10) is supported at the location of the set of wheels (2) of the trailer (1) by a rigid pylon (4) which is provided with superposed lateral brackets (6) on which the longitudinal rails (11, 12) of the roller conveyor (10) freely rest, each bracket (6) comprising raised edges (6a) for guiding the conveyor laterally with play, in which the elements of the outer rails (11) abut at right angles to each bracket (6) by means of a fish-plate (14') in the shape of a flattened O surrounding the bracket, its vertical arms (14'b, 14'c) supporting two pads (22), the opposite faces of which are situated a short distance from the lateral flanges of the bracket (6) in question, whilst a block (15) is fixed beneath the joint of the two elements (11', 11'') with a view to resting on the top of the said bracket (6) and traversing the opening (14'e) in the fish-plate (14') with longitudinal and vertical play.

3. Combination according to Claim 2, characterized in that the fish-plates (14'') for linking the inner rails (12) of the conveyor at the location of the pylon (4) take the form of a piece in the shape of a C turned on its side which straddles the beginning of the bracket (6), said bracket comprising, in the vicinity of the uprights (5) of the pylon (4), stops (21) for limiting the lateral play.

4. Combination according to Claim 3, characterized in that the conveyor (10) is furthermore supported by vertical posts (7) situated on either side of the pylon (4) in the longitudinal direction and comprising superposed brackets (8) on which the rails (11, 12) rest, the ends of the brackets (8) comprising a raised edge (8a), whilst a stop (21) is provided on each bracket close to its join with the post (7) in order to define the lateral clearance of the conveyor at right angles to each post, the elements (11', 11'') forming the outer rails (11) of the conveyor (10) abutting at the location of the brackets (8) of the posts (7), the joins between them being effected by means of a fish-plate (14) in the shape of a flattened O, the upper horizontal arm (14a) of which connects two elements (11', 11''), whilst the free end of the bracket (8) passes through the opening (14e) in the fish-plate (14), a block (15) being fixed beneath the joint of the two elements (11', 11'') so that it traverses the opening (14e) in the fish-plate (14) with longitudinal play and rests against the upper face of the bracket (8).

5. Combination according to Claims 2 and 4, characterized in that the lower arm (14'd, 14''d) of the fishplates (14', 14'') is arranged in its free state a short distance from the lower face of the end of the bracket.

6. Combination according to Claim 1, characterized in that retractable stops (27) are placed at least at the join between the straight sections and the curves in order to isolate the stored products (17) on the said sections from those arranged on the curves.

7. Combination according to Claim 1, characterized in that the rollers (13) comprise an axial member driven permanently during the loading and unloading of the stored products, and an external sleeve (13a) connected by friction to the axial member so that the sleeves (13a) interacting with products (17) which have been stopped do not rotate, the friction force being in proportion to the weight of the products.

8. Combination according to Claim 7, characterized in that two rows of rollers (13', 13'') are provided in the linking curves of the conveyor (10), only those rollers (13') in the outer row being driven.

## Patentansprüche

1. Kombination eines Rollenförderers und eines Hängers, wobei der Rollenförderer aus einer Mehrzahl von geradlinigen Teilabschnitten, die beidseitig des Hängers übereinander angeordnet sind und aus Verbindungskurven besteht, um ein durchgehendes Lagerungselement für flache Produkte zu bilden, wobei der Rollenförderer durch ein mit dem Chassis des Hängers fest verbundenen Aufbau gehalten wird,
**dadurch gekennzeichnet,**
daß die inneren und äußeren Seitenträger (11,12) des Rollenförderers an den horizontalen Stützen (6,8) aneinandergefügt sind, die in bezug auf das Chassis (3) des Hängers (1) übereinander befestigt sind, wobei die zum Zusammenfügen der Seitenträger verwendeten Laschen Mitteln zugeordnet sind, die ihnen ein festgelegtes Spiel einer Längs-, Quer- und vertikalen Verschiebung lassen, während Schuhe (24) unter den Verbindungskurven angebracht sind, damit die Seitenträger (11,12) in diesen Bereichen auf festen Längsstützen (9) mit einem Längs- und Querverschiebungsspiel aufliegen können.

2. Kombination nach Anspruch 1, dadurch gekennzeichnet, daß der Förderer (10) am Fahrgestell (2) des Hängers durch einen starren Gittermast (4) mit übereinander angeordneten Querstützen (6), auf denen frei die Seitenträger (11,12) des Rollenförderers (10) ruhen, gehalten ist, wobei jede Stütze (6) hochgezogene Ränder (6a) zur seitlichen Führung des Förderers mit Spiel, wobei die Elemente der äußeren Seitenträger (11) rechtwinklig zu jeder Stütze (6) mittels einer die Stütze umgebenden Lasche (14') in Form eines liegenden O zusammengefügt sind, deren vertikale Schenkel (14'b,14'c) zwei Schuhe (22) halten, deren gegenüberliegende Flächen sich in einem kleinen Abstand zu den seitlichen Schenkeln der betrachteten Stütze (6) befinden, während eine Fußplatte (15) unter der Verbindungsstelle der zwei Elemente (11' ,11'') befestigt ist, um auf der Stütze (6) zu ruhen und um mit Längs- und vertikalem Spiel die Öffnung (14'e) der Lasche (14') zu durchqueren.

3. Kombination nach Anspruch 2, dadurch gekennzeichnet, daß die Verbindungslaschen (14'') der inneren Seitenträger (12) des Förderers an dem Gittermast (4) mittels eines liegenden C-Stückes, den Anfangspunkt der Stütze (6) umgreifend, realisiert sind, die in der Nähe der senkrechten Stützen (5) des Mastes (4) Begrenzungsanschläge (21) für das Seitenspiel umfaßt.

4. Kombination nach Anspruch 3, dadurch gekennzeichnet, daß der Förderer (10) darüber hinaus durch senkrechte Maste (7) beidseitig des Gittermastes (4), in Längsrichtung gesehen, gestützt wird, die übereinander angeordnete Stützen (8) aufweisen, auf denen die Seitenträger (11,12) ruhen, wobei die Enden der Stützen (8) einen hochgezogenen Rand (8a) umfassen, während ein Anschlag auf jeder Stütze in der Nähe ihres Ausgangspunkts vom Mast (7) vorgesehen ist, um die seitliche Bewegung des Förderers rechtwinklig zu jedem Mast zu bestimmen, wobei die Elemente (11' ,11''), die die äußeren Seitenträger (11) bilden, an den Stützen (8) der Maste (7) zusammengefügt sind und ihre Verbindung mittels einer Lasche (14) in Form eines liegenden O durchgeführt wird, deren oberer horizontaler Schenkel (14a) zwei Elemente (11' ,11'') verbindet, während das freie Ende der Stütze (8) durch die Öffnung (14e) der Lasche (14) hindurchgeht, wobei eine Fußplatte (15) unter der Verbindungsstelle der zwei Elemente (11' ,11'') befestigt ist, damit sie mit Längsspiel die Öffnung (14e) der Lasche (14) durchquert und auf der oberen Fläche der Stütze (8) ruht.

5. Kombination nach den Ansprüchen 2 und 4, dadurch gekennzeichnet, daß der untere Schenkel (14'd,14''d) der Laschen (14' ,14'') im freien Zustand mit einem geringen Abstand unter der unteren Fläche des Endes der Stütze angeordnet ist.

6. Kombination nach Anspruch 1, dadurch gekennzeichnet, daß einfahrbare Anschläge (27) zumindest an der Verbindungsstelle der geradlinigen Teilabschnitte und der Kurven angeordnet sind, um die auf den Teilabschnitten gelagerten Produkte (17) von denen, die auf den Kurven vorgesehen sind, abzutrennen.

7. Kombination nach Anspruch 1, dadurch gekennzeichnet, daß die Rollen (13) ein axiales Organ, das ständig während der Be- und Entladung der gelagerten Produkte angetrieben wird, sowie eine äußere Hülse (13a) umfassen, die durch Reibung mit dem axialen Organ verbunden ist, damit die mit den angehaltenen Produkten (17) zusammenwirkenden Hülse (13a) sich nicht drehen, wobei die Reibungskraft proportional zum Gewicht der Produkte ist.

8. Kombination nach Anspruch 7, daß in den Verbindungskurven des Förderers (10) zwei Rollenreihen (13' ,13'') vorgesehen sind, von denen nur die Rollen der äußeren Rollenteile angetrieben werden.
